# NEUE EUROPÄISCHE PATENTSCHRIFT

(11) **EP 2 432 601 B2**
(45) Veröffentlichungstag und Bekanntmachung des Hinweises auf die Entscheidung über den Einspruch: **25.10.2017**
(45) Hinweis auf die Patenterteilung: 25.06.2014
(21) Anmeldenummer: 10718109.1
(22) Anmeldetag: 16.04.2010
(51) Int. Cl.: B21B 45/00, F27D 17/00

(54) **VERFAHREN UND VORRICHTUNG ZUR RÜCKGEWINNUNG VON ENERGIE AUS EINEM WARMBANDBUND**
METHOD AND DEVICE FOR RECOVERY OF ENERGY FROM A HOT-ROLLED STRIP COIL
PROCÉDÉ ET DISPOSITIF DESTINÉS À LA RÉCUPÉRATION D'ÉNERGIE À PARTIR D'UN COLLET DE BANDE LAMINÉE À CHAUD

(30) Priorität: 18.05.2009 EP 09160503
(43) Veröffentlichungstag der Anmeldung: 28.03.2012
(73) Patentinhaber: Primetals Technologies Germany GmbH, 91052 Erlangen (DE)
(72) Erfinder: MATSCHULLAT, Thomas, 90542 Eckental (DE)
(74) Vertreter: Metals@Linz
(86) Internationale Anmeldenummer: PCT/EP2010/055039
(87) Internationale Veröffentlichungsnummer: WO 2010/133410

(56) Entgegenhaltungen:
- EP-A1- 0 027 787
- JP-A- 1 075 801
- JP-A- 54 062 109
- JP-A- 56 116 834
- JP-A- 57 108 224
- JP-A- S62 247 031

## Beschreibung

Die Erfindung betrifft ein Verfahren zur Rückgewinnung von Energie aus wenigstens einem in einem Warmwalzwerk hergestellten metallischen Warmbandbund aufweisend eine Temperatur von mehr als 200°C, wobei das wenigstens eine Warmbandbund in einer Energierückgewinnungseinrichtung angeordnet wird, wobei zur Rückgewinnung von Energie das wenigstens eine Warmbandbund innerhalb der Energierückgewinnungseinrichtung von einem gasförmigen Medium derart umströmt wird, dass es von dem wenigstens einen Warmbandbund abgegebene Energie, insbesondere Wärme, aufnimmt. Ferner betrifft die Erfindung eine Verwendung einer Vorrichtung zur Rückgewinnung von Energie, insbesondere Wärme, aus wenigstens einem in einem Warmwalzwerk hergestellten metallischen Warmbandbund aufweisend eine Temperatur von mehr als 200°C, mit einer Energierückgewinnungseinrichtung, innerhalb derer das wenigstens eine Warmbandbund anordenbar ist, wobei die Energierückgewinnungseinrichtung derart ausgebildet ist, dass eine Energieübertragung von dem wenigstens einen innerhalb der Energierückgewinnungseinrichtung angeordneten Warmbandbund auf ein die Energierückgewinnungseinrichtung durchströmendes gasförmiges Medium erfolgt. Ein solches Verfahren ist z.B. aus der JP 54062109-A oder der JP 57108224-A bekannt.

Bei der Herstellung von warmgewalzten Metallgütern, insbesondere Metallband, wird am Ende einer Herstellungsstraße, insbesondere einer Warmbandstraße, das hergestellte warme Metallgut gesammelt, in der Regel aufgewickelt.

Bei der Herstellung von Warmband erfolgt am Ende der Warmbandstraße ein sogenanntes Aufhaspeln des gewalzten Warmbands. Dieses aufgewickelte bzw. aufgehaspelte warme Metallband wird als Warmbandbund bezeichnet.

Die von dem Warmbandbund aufgewiesene thermische Energie wird in den heutigen Walzwerken in der Regel nicht genutzt. Vielmehr werden die hergestellten Warmbandbunde zwischengelagert bis diese weiterverarbeitet bzw. ausgeliefert werden, wobei die Warmbandbunde auskühlen und ihre Energie an die Umgebung abgeben.

Aus sozialen und umweltpolitischen Gründen ist die Verringerung des Verbrauchs von Ressourcen, insbesondere Energie, wünschenswert. Auch sollte eine Umweltbelastung durch Schadgase, bspw. CO₂, soweit wie möglich vermieden werden. Ferner ist ein CO₂-Ausstoß einer Industrieanlage betriebswirtschaftlich im Hinblick auf einen erforderlichen Kauf bzw. möglichen Verkauf von Emissionszertifikaten für einen Betreiber der Industrieanlage relevant. Ein besonders geringer Schadstoffausstoß einer Industrieanlage verglichen mit Wettbewerbern kann letztendlich zu Wettbewerbsvorteilen für einen Betreiber führen.

Aus der japanischen Offenlegungsschrift JP 57188683-A ist eine Vorrichtung zur Rückgewinnung von Wärme von Warmband bekannt, welches in Form eines Warmbandbundes vorliegt. Gemäß diesem Stand der Technik wird das Warmband abgehaspelt und in Form eines Metallbandes durch einen Beiztank geführt, welcher Wärmeaustauschrohre umfasst und mit geschmolzenem Salz gefüllt ist. Das Band gibt in seinem abgewickelten Zustand die Wärme an das Salzbad ab, welche durch die Austauschrohre abgeführt wird. Als Medium zur Abführung der Wärme wird Wasser vorgeschlagen.

Nachteil dieser Vorgehensweise gemäß Stand der Technik ist es, dass die Wärmerückgewinnung technisch sehr aufwendig ist und daher bis heute auf diese Art und Weise zumindest nicht in der Breite, sofern überhaupt, realisiert wird.

Der Erfindung liegt die Aufgabe zugrunde, ein technisch einfaches Energierückgewinnungsverfahren bzw. eine einfache Vorrichtung zur Energierückgewinnung bereitzustellen, welche für jegliche Arten von Warmband verwendbar sind, unabhängig von deren weiteren Prozessierung.

Der verfahrensmäßige Teil der Aufgabe wird gelöst durch ein Verfahren der eingangs genannten Art, wobei das wenigstens eine Warmbandbund mittels einer Transporteinrichtung durch die Energierückgewinnungseinrichtung transportiert wird. Hierzu muss der Warmbandbund nicht abgehaspelt werden, sondern kann in seinem aufgehaspelten Zustand verbleiben. Durch die Verwendung eines gasförmigen Mediums, insbesondere Luft, zur Wärmeabfuhr wird einerseits eine Veränderung der Oberfläche des aufgehaspelten Warmbands durch ein flüssiges Medium vermieden. Andererseits ist das erfindungsgemäße Verfahren für jegliche Warmbandbunde anwendbar, unabhängig von deren weiteren Prozessierung nach Durchlaufen des erfindungsgemäßen Verfahrens. Durch die Transporteinrichtung kann außerdem ein kontinuierlicher Prozess realisiert werden, bei dem Warmbandbunde der Energierückgewinnungseinrichtung eingangsseitig zugeführt werden und der Energierückgewinnungseinrichtung kontinuierlich ausgangsseitig abgeführt werden. Dadurch kann das Verfahren ohne weiteres in bestehenden Warmwalzwerken ohne größeren technischen Aufwand realisiert werden und ohne nachfolgende Prozesse in der Industrieanlage zu stören.

Hierbei durchläuft gleichzeitig eine Mehrzahl an Warmbandbunden die Einhausung. Auf diese Weise kann besonders effizient eine Wärmerückgewinnung erfolgen, da eine Energierückgewinnung gleichzeitig für eine Mehrzahl an Warmbandbunden erfolgt. Dadurch wird die Energieaufnahme des gasförmigen Mediums erhöht und gleichzeitig kann eine größere Anzahl an Warmbandbunden verarbeitet werden. Dadurch ist ggf. nur eine Energierückgewinnungseinrichtung für mehrere Warmwalzstraßen erforderlich.

Weiterhin wird die Mehrzahl der Warmbandbunde während des Durchlaufens der Einhausung in einer ersten translatorischen Richtung bewegt, wobei das gasförmige Medium eine Strömungsrichtung aufweist, die der Bewegungsrichtung der Warmbandbunde im wesentlichen entgegengesetzt ist. Dadurch wird erreicht, dass ein bestimmtes Gasvolumen den gesamten Warmbandbund bzw. eine Vielzahl an Warmbandbunden in der Einhausung anströmt und von diesem Wärme abführt. Würde eine Strömung des gasförmigen Mediums in Transportrichtung erfolgen, so kann eine geringe Relativgeschwindigkeit von Gas und Warmbandbund vorliegen, was für die Energieabfuhr durch das Gas von Nachteil ist. Insbesondere ist es von Vorteil, dass das energieärmere gasförmige Medium an einer Stelle der Einhausung zugeführt wird, an der die Warmbandbunde bereits eine hohe Menge an ihrer abgebbaren Wärme abgegeben haben, und dass das energiereichere gasförmige Medium an einer Stelle aus der Einhausung abgeführt wird, an der die Warmbandbunde noch eine relativ hohe thermische Energie, insbesondere Temperatur, aufweisen. Insbesondere sind Gegenstrom- und auch Kreuzstromverfahren für das Gas vorteilhaft.

Das Warmbandbund kann während der Energieabgabe an das Gas ruhen oder bewegt werden. Insbesondere kann das Warmbandbund während der Energierückgewinnung um seine Rotationsachse gedreht werden, so dass das Warmbandbund gleichmäßig Energie, insbesondere Wärme, an das gasförmige Medium abgibt. Dadurch wird erreicht, dass keine lokal eng begrenzten Kontaktstellen des Warmbandbundes mit einem Festkörper, z.B. einer Transporteinrichtung, dauerhaft in Kontakt stehen und es dadurch zu einer verstärkten lokalen Kühlung des Warmbandbunds kommt, was zu Inhomogenitäten in der Härte des abkühlenden Warmbandbunds führen kann.

Zur Energierückgewinnung können verschiedene Mechanismen eingesetzt werden. Bspw. kann eine Energierückgewinnung dadurch erfolgen, dass das gasförmige Medium durch Aufnahme von von dem wenigstens einem Warmbandbund abgegebener Wärme seine Temperatur erhöht. Bspw. wird kaltes Gas der Energierückgewinnungseinrichtung zugeführt und warmes Gas aus der Energierückgewinnungseinrichtung abgeführt. In einem solchen Fall kann vorzugsweise Luft als gasförmiges Medium zum Einsatz kommen.

Ferner kann eine Wärmerückgewinnung auch dadurch erfolgen, dass die von dem Warmbandbund abgegebene thermische Energie zur Durchführung einer chemischen Umsetzung von einem ersten, energieärmeren gasförmigen Edukt in ein zweites energiereicheres gasförmiges Produkt verwendet wird. Anschließend kann das durch die Abwärme des wenigstens einen Warmbandbunds synthetisierte gasförmige Produkt weiter verwertet werden.

Eine Abfuhr von thermischer Energie des Warmbandbunds kann auch durch Anregung von Molekülzuständen des gasförmigen Mediums erfolgen. Hierzu sind gasförmige Medien zu verwenden, deren molekularer Aufbau rotatorische Freiheitsgrade und/oder Schwingungs-Freiheitsgrade aufweist. Diese Freiheitsgrade tragen zur Wärmekapazität des Gases, wodurch ein höherer Energieübertrag pro Gasmolekül ermöglicht wird, als nur bei einer reinen Temperaturerhöhung eines mono-atomaren oder diatomaren Gases. Derartige Gase sind dem Fachmann bekannt. Ein besonders einfaches, inertes Gas mit einem Schwingungsfreiheitsgrad ist bspw. CO₂.

Es handelt sich bei den oben angeführten Energieübertragungsmechanismen um bloße Beispiele. Es können alle für gasförmige Medien bekannten Energieübertragungsmechanismen für das erfindungsgemäße Verfahren verwendet, um die thermische Energie des Warmbandbundes auf das gasförmige Medium zu übertragen.

In einer vorteilhaften Ausgestaltung des erfindungsgemäßen Verfahrens durchläuft das wenigstens eine Warmbandbund eine Einhausung, insbesondere einen Tunnelofen, welcher von der Energierückgewinnungseinrichtung umfasst ist und innerhalb derer die Energierückgewinnung erfolgt. Die Verwendung einer Einhausung ist insbesondere zweckmäßig bei der Verwendung eines gasförmigen Mediums zur Energierückgewinnung. Die Einhausung ist derart beschaffen, dass wenigstens ein Warmbandbund in die Einhausung einführbar bzw. aus dieser ausführbar ist. Ferner ist diese vorzugsweise bis auf eine Eintrittsöffnung und eine Austrittsöffnung für die Warmbandbunde gasdicht ausgestaltet. Dadurch wird der Austritt des gasförmigen Mediums aus der Energierückgewinnungseinrichtung möglichst gering gehalten.

In einer weiteren vorteilhaften Ausgestaltung des erfindungsgemäßen Verfahrens durchläuft ein in die Einhausung eintretender Warmbandbund und/oder ein aus der Einhausung austretender Warmbandbund eine einen Wärmeaustausch zwischen Umgebung und Energierückgewinnungseinrichtung verringernde Schleuse. Dadurch wird der Wärmeaustausch zwischen Energierückgewinnungseinrichtung und Umgebung minimiert, da die Wärmeschleusen beispielsweise während des Einbringens des Warmbandbundes bzw. während des Ausbringens des Warmbandbundes aus der Einhausung einen Austritt des gasförmigen Medium aus der Einhausung vermeidet oder verringert. Die Wärmeschleuse ist insofern derart ausgebildet, dass diese einen Austritt von gasförmigem Medium aus der Einhausung während des Einschleusens bzw. des Ausschleusens des Warmbandbundes in bzw. aus der Einhausung beschränkt bzw. vollständig verhindert. Dies kann mittels fluidmechanischen Mitteln, z.B. dem Design eines entsprechenden Strömungsprofils, oder mittels mechanischer Mittel, z.B. durch entsprechende verschließbare Öffnungen, etwa in Form von Türen oder Klappen, erreicht werden.

Durch eine im Wesentlichen antiparallele Einstellung der Bewegungsrichtung und der Strömungsrichtung wird somit eine besonders effiziente Energieabführung von den Warmbandbunden gewährleistet.

In einer besonders vorteilhaften Ausgestaltung des erfindungsgemäßen Verfahrens ist die Temperatur des gasförmigen Mediums vor Aufnahme der von durch den wenigstens einen Warmbandbund abgegebenen Energie, insbesondere Wärme, im Wesentlichen die Raumtemperatur. Diese ist in der Regel ausreichend kühl, um einen guten Wirkungsgrad für eine Energieabführung von den Warmbandbunden zu erreichen. Ein gasförmiges Medium mit Raumtemperatur ist insbesondere technisch sehr leicht zu beschaffen, da es sich in der Umgebung der Energierückgewinnungseinrichtung befindet.

In einer besonders vorteilhaften Ausgestaltung des erfindungsgemäßen Verfahrens ist die Temperatur des gasförmigen Mediums vor Aufnahme der von durch den wenigstens einem Warmbandbund abgegebenen Energie geringer als die Raumtemperatur. Durch die Verwendung eines gasförmigen Mediums mit einer Temperatur die geringer ist, als die Raumtemperatur, wird der Wirkungsgrad der Energierückgewinnungseinrichtung weiter erhöht. Besonders einfach ist dies ohne zusätzlichen Energieaufwand zu gewährleisten in kälteren Regionen der Welt, wo beispielsweise über die Ansaugung von Außenluft ein entsprechendes gasförmiges Medium mit einer Temperatur beispielsweise von unter 0°C verwendet werden kann. Ggf. sollte hierzu noch ein Filter vorgesehen werden, bevor die Außenluft der Energierückgewinnungseinrichtung zugeführt wird, um eine Verschmutzung oder Beschädigung der Warmbandbunde durch Schmutz zu vermeiden.

In einer weiteren vorteilhaften Ausgestaltung des erfindungsgemäßen Verfahrens erfolgt die Energierückgewinnung während des Transports des wenigstens einem Warmbandbunds von einem ersten Standort zu einem zweiten Standort innerhalb der Industrieanlage, wobei der erste Standort der Standort der Aufhaspel einer Warmbandstraße und der zweite Standort abhängig von der weiteren Verfahrensweise mit dem wenigstens einem Warmbandbund ist. Dies bedeutet, dass beispielsweise jeder Warmbandbund, der mittels einer Warmbandstraße hergestellt wurde, zunächst die Energierückgewinnungseinrichtung durchläuft, bevor dieser gegebenenfalls einem weiteren Prozess zugeführt wird, beispielsweise einem Kaltwalzen oder einem Beizprozess, oder an einen Kunden ausgeliefert wird. Insbesondere kann so vermieden werden, dass größere Zusatzwege zurückgelegt werden müssen, welche auf die Energierückgewinnung zurückzuführen sind.

In einer weiteren vorteilhaften Ausführungsform des erfindungsgemäßen Verfahrens wird das durch die abgegebene Energie des wenigstens einen Warmbandbunds mit Energie angereicherte gasförmige Medium verdichtet und/oder gespeichert. Dadurch steht das mit Energie angereicherte gasförmige Medium für andere mögliche Verwendungen zur Verfügung. Beispielsweise kann das gespeicherte heiße, gasförmige Medium als Brennluftvorwärmung verwendet werden oder kann in vorteilhafter Weise beim Hochofen im Rahmen einer Windzumischung verwendet werden. Alternativ ist auch eine Verwendung der Heißluft für die Energiegewinnung beispielsweise in Form einer Heißluftturbine möglich. Gegebenenfalls sind auch andere Einrichtungen, insbesondere Heizeinrichtungen, verfügbar, in welchen die verdichtete und/oder gespeicherte Heißluft verwendet werden kann.

In einer weiteren vorteilhaften Ausgestaltung der Erfindung umströmt das gasförmige Medium das wenigstens eine Warmbandbund mit einem einstellbaren Druck, insbesondere größer als 1 bar. Durch die Erhöhung des Drucks bei sonst unveränderter Strömungsgeschwindigkeit und gleicher Temperatur des Gases wird die Masse des Gases, welches Wärme vom Warmbandbund aufnimmt, erhöht. Dadurch wird der Wirkungsgrad für die Wärmerückgewinnung verbessert, da pro Zeiteinheit mehr Wärme auf das Gas übertragen wird.

Der vorrichtungsmäßige Teil der Aufgabe wird gelöst durch die Verwendung einer Vorrichtung der eingangs genannten Art, wobei die Vorrichtung eine Transporteinrichtung zum Transportieren des wenigstens einem Warmbandbunds durch die Energierückgewinnungseinrichtung aufweist. Dadurch wird eine Vorrichtung bereitgestellt, welche eine Energierückgewinnung von einem Warmbandbund in besonders einfacher Weise realisiert, wobei der Warmbandbund während der Energierückgewinnung die Energierückgewinnungseinrichtung durchläuft.

Hierbei weist die Energierückgewinnungseinrichtung eine Einhausung, insbesondere einen Tunnelofen auf, durch welche der wenigstens eine Warmbandbund transportierbar ist und innerhalb der, vorzugsweise während des Transports, die Energierückgewinnung erfolgt. Indem eine Energierückgewinnungseinrichtung mittels einer Einhausung realisiert wird, welche insbesondere für das Führen eines gasförmigen Mediums ausgebildet ist, kann in besonders einfacher Weise eine Vorrichtung bereitgestellt werden, mittels welcher das erfindungsgemäße Verfahren ausführbar ist. Vorzugsweise findet die Energieübertragung während des Transports des Warmbandbundes durch die Einhausung statt, so dass eine möglichst geringe Zeit aufgewendet werden muss, um die Energie des Warmbandbundes auf das gasförmige Medium zu übertragen.

Weiterhin ist das wenigstens eine Warmbandbund, insbesondere die Mehrzahl der die Einhausung gemeinsam durchlaufenden Warmbandbunde in eine erste translatorische Richtung bewegbar, wobei die Strömung des gasförmigen Mediums wenigstens abschnittsweise in eine der ersten translatorischen Richtung im Wesentlichen entgegengesetzte Richtung einstellbar ist. Dadurch wird erreicht, dass das gasförmige Medium von den kälteren Warmbandbunden zu den wärmeren Warmbandbunden strömt. Dadurch ist ein hoher Wirkungsgrad möglich.

In einer weiteren vorteilhaften Ausführungsform der erfindungsgemäßen Verwendung der Vorrichtung umfasst die Einhausung wenigstens eine Schleuse zur Verringerung eines Energieaustausches, insbesondere Wärmeaustausches, zwischen einer Umgebung der Energierückgewinnungseinrichtung und der Energierückgewinnungseinrichtung bei Eintritt und/oder Austritt wenigstens eines Warmbandbundes in die bzw. aus der Einhausung. Durch das Vorsehen wenigstens einer Schleuse wird die Energierückgewinnung besonders effizient ausgestaltet, da die Energie bei Ein- und/oder Austritt eines Warmbandbundes in die Einhausung zwischen Umgebung und Wärmerückgewinnung nur im verringerten Maße ausgetauscht wird. Dadurch steigt der Wirkungsgrad der Energierückgewinnung.

In einer besonders vorteilhaften Ausführungsform der erfindungsgemäßen Verwendung der Vorrichtung weist die Einhausung eine Zuführeinrichtung für das gasförmige Medium und eine Abführeinrichtung für das gasförmige Medium auf, wobei die Zuführeinrichtung und die Abführeinrichtung derart angeordnet sind, dass diese im ersten Drittel und im dritten Drittel der Einhausung und/oder zwischen einer eingangsseitigen und einer ausgangsseitigen Schleuse der Einhausung angeordnet sind. Dadurch wird erreicht, dass der Strömungsweg des zugeführten Gases in der Energierückgewinnungseinrichtung möglichst lang ist, wodurch ein effizienter Energieaustausch zwischen Warmbandbund und gasförmigem Medium ermöglicht wird. Vorzugsweise ist die Zuführeinrichtung des gasförmigen Mediums näher am ausgangseitigen Ende der Einhausung angeordnet als die Abführeinrichtung. Dies bedeutet, dass das energieärmere gasförmige Medium an einer Stelle der Einhausung zugeführt wird, von der aus es entgegen der Bewegungsrichtung der Warmbandbunde in Richtung der wärmeren Warmbandbunde strömt. Dadurch ist ein besonders effizienter Energieaustausch möglich. Die Abführeinrichtung ist vorzugsweise möglichst nahe am eingangseitigen Ende der Einhausung bzw. möglichst nah hinter der Schleuse in Transportrichtung der Warmbandbunde angeordnet.

In einer weiteren vorteilhaften Ausgestaltung der erfindungsgemäßen Verwendung der Vorrichtung ist die Einhausung zur Aufnahme einer Mehrzahl an Warmbandbunden ausgebildet. Abhängig vom Betrieb der Warmwalzstraße fallen innerhalb kürzerer Zeit eine Mehrzahl an Warmbandbunden an. Um die Energierückgewinnung aus diesen Warmbandbunden effizient zu gestalten, werden diese sukzessive nach Beendigung des Aufhaspelvorgangs der Einhausung zugeführt, um von diesen Energie rückzugewinnen. Hierzu ist die Einhausung entsprechend ausgebildet, d.h. es kann gleichzeitig eine Mehrzahl, insbesondere eine Vielzahl, an Warmbandbunden die Einhausung durchlaufen. Dies hat zudem den Vorteil, dass das durch die entsprechend großen Abmessungen der Einhausung das strömende gasförmige Medium bei gegebener Strömungsgeschwindigkeit einen längeren Zeitraum zur Verfügung hat, um Energie von den Warmbandbunden aufzunehmen.

In einer vorteilhaften Ausgestaltung der erfindungsgemäßen Verwendung der Vorrichtung ist die Abführeinrichtung mit einem Verdichter zum Verdichten eines gasförmigen Mediums derart verbunden, dass das gasförmige Medium von der Abführeinrichtung zum Verdichter führbar ist. Durch eine Verdichtung des aus der Energierückgewinnung abgeführten Gases kann der Energieinhalt des Gases, insbesondere dessen Temperatur, weiter gesteigert werden. Dies ist insbesondere vorteilhaft bei der Weiterverwendung des gasförmigen Mediums z.B. als Heißgas in nachfolgenden Prozessen.

In einer weiteren vorteilhaften Ausführungsform der erfindungsgemäßen Verwendung der Vorrichtung ist die Abführeinrichtung mit einer Speichereinrichtung zum Speichern des gasförmigen Mediums derart verbunden, dass das gasförmige Medium von der Abführeinrichtung zur Speichereinrichtung führbar ist. Durch das Vorsehen einer Speichereinrichtung ist es somit nicht erforderlich, eine direkte Verwendung des hergestellten Heißgases bzw. des abgeführten gasförmigen Mediums bereitzustellen. Das gespeicherte gasförmige Medium bzw. Heißgas kann dann weiterverwendet werden, wenn dieses in dem jeweiligen für die Verwendung vorgesehenen Prozess benötigt wird. Dadurch wird der Betrieb der Industrieanlage, an welche das Warmwalzwerk angebunden ist, effizienter im Hinblick auf seinen Energieverbrauch.

Die Erfindung erlaubt somit einen effizienteren Umgang mit Energie, wodurch der Einsatz von Ressourcen verringert wird, und ermöglicht eine Reduktion von Schadgasen, insbesondere CO₂, wobei ein möglichst geringer CO₂ in Anbetracht der umweltökonomischen Tendenzen immer wichtiger wird.

Weitere Vorteile der Erfindung ergeben sich aus einem Ausführungsbeispiel, welches anhand einer schematisch dargestellten Figur genauer erläutert wird.

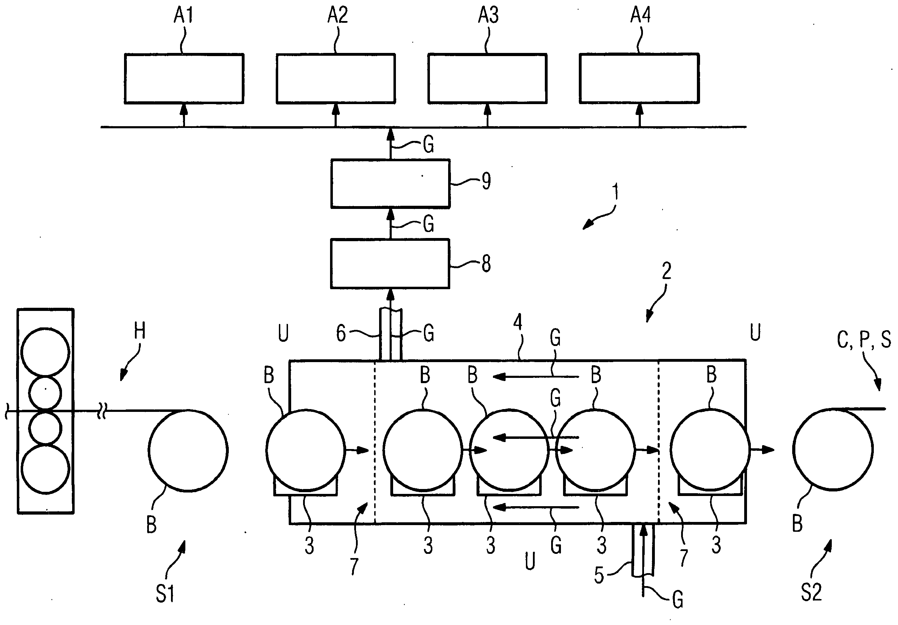

Die Figur zeigt eine schematisch dargestellte Vorrichtung 1 zur Rückgewinnung von Energie aus einem metallischen Metallbandbund B. Der metallische Metallbandbund B wird mittels einer ebenfalls schematisch dargestellten Warmwalzstraße H hergestellt.

Das aus der Warmwalzstraße H auslaufende Metallband wird zu einem Warmbandbund B aufgehaspelt und anschließend einer von der Vorrichtung 1 zur Energierückgewinnung umfassende Energierückgewinnungseinrichtung 2 zugeführt.

Die Energierückgewinnungseinrichtung 2 umfasst eine Einhausung 4, welche mit Ausnahme einer Warmbandbundzuführöffnung und einer Warmbandbundabführöffnung gasdicht ausgebildet ist.

Mittels einer Transporteinrichtung 3 wird ein Warmbandbund 5 über eine eingangsseitige Schleuse 7 der Einhausung 4 zugeführt. Ferner ist eine ausgangsseitige Schleuse 7 vorhanden, welche eine Warmbandbund B beim Austritt aus der Einhausung 4 durchläuft. Die Einhausung ist wärmeisoliert ausgebildet, so dass möglichst wenig Energie über die Wände der Einhausung 4 an die Umgebung U abgegeben wird.

Eine Schleuse 7 ist derart ausgestaltet, dass ein Energieaustausch, insbesondere Wärmeaustausch, zwischen einem zentralen bzw. mittigen Teil der Einhausung 4 und der Umgebung U der Einhausung 4 möglichst gering ist. Insbesondere ist die wenigstens eine Schleuse 7 derart ausgebildet, dass ein Austritt von in die Einhausung 4 eingeleitetem gasförmigem Medium durch die Schleuse 7 möglichst vermieden wird.

Die Schleuse kann durch wenigstens ein entsprechendes mechanisches Element gebildet sein, welches eine Schleusenfunktion hat. Alternativ kann die Wärmeschleuse 7 bspw. durch einen Gasstrom realisiert werden, welcher senkrecht zur Transportrichtung des in die Einhausung 4 eingeführten Warmbandbundes B strömt. Letztere Variante weist den Vorteil auf, dass keine mechanischen Bauteile verschleißen können und dass eine Kollisionsgefahr für die Warmbandbunde B mit Teilen der Einhausung 4, z.B. mechanischen Elementen der Schleuse 7, verringert wird, da mechanische Teile weitestgehend entfallen.

Nachdem das Warmbandbund B die Schleuse 7 durchlaufen hat, wird dieses von einem gasförmigen Medium G, hier bspw. Luft, welches entgegen der Transportrichtung des Warmbandbundes B strömt, umspült. Dabei nimmt das Gas Energie des Warmbandbundes B auf und erwärmt sich.

Auch können andere Gase als Luft verwendet werden, welche insbesondere angeregte Molekühlzustände (Rotation und Schwingungen von Gasmolekülteilen) einnehmen können, da auf diese Art und Weise pro Gasvolumen eine höhere Wärmemenge vom Warmbandbund abgeführt werden kann.

Die Luft G wird mittels einer Zuführeinrichtung 5 der Einhausung 4 zugeführt und mittels einer Abführeinrichtung 6 aus der Einhausung 4 abgeführt. Die Strömung des Gases G entgegen der Transportrichtung eines Warmbandbundes B wird vorzugsweise durch ein entsprechend angelegtes Druckgefälle in der Einhausung 4 bereitgestellt.

Die Abführeinrichtung ist vorzugsweise in Transportrichtung der Warmbandbunde B hinter der eingangsseitigen Schleuse 7 der Einhausung 4 angeordnet. Die Zuführeinrichtung 5 ist vorzugsweise in Transportrichtung der Warmbandbunde B vor der ausgangsseitigen Schleuse 7 der Einhausung 4 angeordnet.

Vorzugsweise wird eine möglichst lange Wegstrecke, gemessen in Transportrichtung, zwischen Zuführeinrichtung 5 und Abführeinrichtung 6 vorgesehen, so dass bei vorgegebener Strömungsgeschwindigkeit des Gases G von der Zuführeinrichtung 5 zur Abführeinrichtung 6 eine möglichst lange Kontaktzeit für das Gas G mit den Warmbandbunden B besteht.

Gemäß der Figur ist die Einhausung 4 derart ausgebildet, dass eine Mehrzahl an Warmbandbunden die Einhausung 4 gleichzeitig durchlaufen können und stets mehrere Warmbandbunde B gleichzeitig Energie an das gasförmige Medium abgeben können. Durch die gleichzeitige Energierückgewinnung für mehrere Warmbandbunde B kann das Verfahren besonders effizient ausgestaltet werden und mit hoher Warmbandbundkapazität betrieben werden.

Nachdem ein Warmbandbund B den Weg zwischen der eingangsseitigen Schleuse 7 der Einhausung 4 und der ausgangsseitigen Schleuse 7 der Einhausung 4 zurückgelegt hat, wird dieser mittels der ausgangsseitigen Schleuse 7 der Einhausung 4 in energieeffizienter Weise aus der Einhausung 4 ausgeschleust. Die Energierückgewinnung für einen derartigen Warmbandbund ist zunächst abgeschlossen, da dessen Restenergiegehalt in der Regel nicht mehr wirtschaftlich bzw. sinnvoll rückgewinnbar ist.

Anschließend kann dieser Warmbandbund B in unterschiedlichen Prozessen weiterbearbeitet werden. Beispielsweise sind in der Figur als mögliche der Energierückgewinnung nachgelagerte Prozesse ein Kaltwalzen C vorgesehen, oder die Bearbeitung des aufgewickelten Metallbands in einer Behandlungslinie P oder Beizlinie oder die Lagerung S des Warmbandbundes B an einem Lagerplatz.

Vorzugsweise durchlaufen alle von der Warmbandstraße H hergestellten Warmbandbunde B die Energierückgewinnungseinrichtung 2. Gemäß der vorliegenden Figur entspricht der Aufhaspel der Warmbandstraße H dem ersten Standort S1 des Warmbandbundes und der zweite Standort S2 dem Abhaspel bspw. einer Kaltwalzstraße C oder Behandlungslinie P.

Das durch die Warmbandbunde mit Energie angereicherte Gas G wird mittels der Abführeinrichtung 6 einem Verdichter 8 zugeführt. Hier kann durch ein Verdichten des gasförmigen Mediums ein Heißgas hergestellt werden, welches geeigneten Applikationen in der Industrieanlage zugeführt werden kann.

Durch die Verdichtung des gasförmigen mit Energie angereichterten Mediums wird der Energieinhalt des gasförmigen Mediums pro Volumeneinheit weiter erhöht, wodurch ein weiterer Einsatzbereich des gasförmigen Mediums ermöglicht wird. Die Verdichtung des gasförmigen Mediums ist jedoch nicht zwingend erforderlich, um dieses in weiteren Applikationen einzusetzen.

Das verdichtete oder unverdichtete gasförmige Medium kann in einer Speichereinrichtung 9 gespeichert werden, so dass es bei Bedarf einem entsprechenden Prozess der Industrieanlage zugeführt werden kann.

Beispielhaft sind in der Figur vier Prozesse in Form der Bezugszeichen A1, A2, A3 und A4 benannt, welche beispielsweise den Prozess der Brennluftvorwärmung für ein Warmwalzwerk oder für ein Kraftwerk betreffen, einen Prozess zur Windzumischung für einen Hochofen, die Nutzung des verdichteten oder unverdichteten gasförmigen Mediums in einer Heißluftturbine zur Energiegewinnung, oder die Verwendung des gasförmigen Mediums in Nebeneinrichtungen des Hochofens und des Stahlwerks. Beispielsweise kann das gasförmige Medium auch dazu verwendet werden, die Industrieanlage, insbesondere den Leitstand der Industrieanlage, zu beheizen.

Durch das erfindungsgemäße Verfahren und die erfindungsgemäße Verwendung der Vorrichtung ist es möglich, Energie in erheblichen Umfang einzusparen bzw. zurückzugewinnen und dadurch die CO₂-Bilanz einer Industrieanlage signifikant zu verbessern.

## Patentansprüche

1. Verfahren zur Rückgewinnung von Energie aus wenigstens einem in einem Warmwalzwerk (H) hergestellten metallischen Warmbandbund (B) aufweisend eine Temperatur von mehr als 200°C,
- wobei das wenigstens eine Warmbandbund (B) wenigstens abschnittsweise innerhalb einer Energierückgewinnungseinrichtung (2) angeordnet wird,
- wobei zur Rückgewinnung von Energie das wenigstens eine Warmbandbund (B) innerhalb der Energierückgewinnungseinrichtung (2) von einem gasförmigen Medium (G) derart umströmt wird, dass es von dem wenigstens einen Warmbandbund (B) abgegebene Energie, insbesondere Wärme, aufnimmt,
- wobei das wenigstens eine Warmbandbund (B) mittels einer Transporteinrichtung (3) durch die Energierückgewinnungseinrichtung (2) transportiert wird,
- wobei gleichzeitig eine Mehrzahl an Warmbandbunden (B) innerhalb der Einhausung (4) angeordnet wird,
- wobei die Mehrzahl an Warmbandbunden (B) die Einhausung (4) in einer ersten translatorischen Richtung durchläuft,
- wobei das gasförmige Medium (G) eine Strömungsrichtung aufweist, die der Bewegungsrichtung der Warmbandbunde (B) im Wesentlichen entgegengesetzt ist.

2. verfahren nach Anspruch 1,
**dadurch gekennzeichnet, dass**
das wenigstens eine Warmbandbund (B) in einer Einhausung (4), insbesondere einem Tunnelofen, angeordnet wird, welche von der Energierückgewinnungseinrichtung (2) umfasst ist und innerhalb derer die Energierückgewinnung erfolgt.

3. Verfahren nach Anspruch 1 oder 2,
**dadurch gekennzeichnet, dass**
ein in die Energierückgewinnungseinrichtung (2), insbesondere Einhausung (4), eintretender Warmbandbund (B) und/oder ein aus der Energierückgewinnungseinrichtung (2), insbesondere Einhausung (4), austretender Warmbandbund (B) eine einen Energieaustausch, insbesondere Wärmeaustausch, zwischen Umgebung (U) und Energierückgewinnungseinrichtung (2) verringernde Schleuse (7) durchläuft.

4. Verfahren nach einem der vorhergehenden Ansprüche,
**dadurch gekennzeichnet, dass**
die Temperatur des gasförmigen Mediums (G) vor Aufnahme von durch den wenigstens einen Warmbandbund (B) abgegebene Energie, insbesondere Wärme, im Wesentlichen die Raumtemperatur ist.

5. Verfahren nach einem der Ansprüche 1 bis 3,
**dadurch gekennzeichnet, dass**
die Temperatur des gasförmigen Mediums (G) vor Aufnahme von durch den wenigstens einen Warmbandbund (B) abgegebene Energie, insbesondere Wärme, kleiner als die Raumtemperatur ist.

6. Verfahren nach einem der vorhergehenden Ansprüche,
**dadurch gekennzeichnet, dass**
die Energierückgewinnung während des Transports des wenigstens einen Warmbandbunds von einem ersten Standort (S1) zu einem zweiten Standort (S2) innerhalb der Industrieanlage erfolgt, wobei der erste Standort (S1) der Standort der Aufhaspel einer Warmbandstraße (10) und der zweite Standort abhängig von der weiteren Verfahrensweise mit dem wenigstens einen Warmbandbund (B) ist.

7. Verfahren nach einem der vorhergehenden Ansprüche,
**dadurch gekennzeichnet, dass**
das gasförmige Medium das wenigstens eine Warmbandbund (3) mit einem einstellbaren Druck, insbesondere größer als 1 bar, umströmt.

8. Verfahren nach einem der vorhergehenden Ansprüche,
**dadurch gekennzeichnet, dass**
das durch die abgegebene Energie des wenigstens einen Warmbandbunds (B) mit Energie angereicherte gasförmige Medium (G) verdichtet und/oder gespeichert wird.

9. Verwendung einer Vorrichtung (1) zur Rückgewinnung von Energie, insbesondere Wärme, aus wenigstens einem in einem Warmwalzwerk (H) hergestellten metallischen Warmbandbund (B) aufweisend eine Temperatur von mehr als 200°C, wobei die Vorrichtung eine Energierückgewinnungseinrichtung (2) aufweist, innerhalb derer das wenigstens eine Warmbandbund (B) anordenbar ist, wobei die Energierückgewinnungseinrichtung (2) derart ausgebildet ist, dass eine Energieübertragung von dem wenigstens einen innerhalb der Energierückgewinnungseinrichtung (2) angeordneten Warmbandbund (B) auf ein die Energierückgewinnungseinrichtung (2) durchströmendes, gasförmiges Medium (G) erfolgt, mit einer Transporteinrichtung (3) zum Transportieren des wenigstens einen Warmbandbunds (B) durch die Energierückgewinnungseinrichtung (2), wobei die Energierückgewinnungseinrichtung (2) eine Einhausung (4), insbesondere einen Tunnelofen, aufweist, durch welche der wenigstens eine Warmbandbund (B) transportierbar ist und innerhalb der, vorzugsweise während des Transports, die Energierückgewinnung erfolgt, wobei das wenigstens eine innerhalb der Einhausung (4) anordenbare Warmbandbund (B) in eine erste translatorische Richtung bewegbar ist, wobei die Strömung des gasförmigen Mediums (G) wenigstens abschnittsweise in eine der ersten translatorischen Richtung im wesentlichen entgegengesetzte Richtung einstellbar ist.

10. Verwendung einer Vorrichtung nach Anspruch 9,
**dadurch gekennzeichnet, dass**
die Einhausung (4) wenigstens eine Schleuse (7) zur Verringerung eines Energieaustausches, insbesondere Wärmeaustausches, zwischen einer Umgebung (U) der Energierückgewinnungseinrichtung (2) und der Energierückgewinnungseinrichtung (2) bei Eintritt und/oder Austritt wenigstens eines Warmbandbunds (B) in die bzw. aus der Einhausung (4) umfasst.

11. Verwendung einer Vorrichtung nach Anspruch 9 oder 10,
**dadurch gekennzeichnet, dass**
die Einhausung (4) eine Zuführeinrichtung (5) für das gasförmige Medium (G) und eine Abführeinrichtung (6) für das gasförmige Medium (G) aufweist, wobei die Zuführeinrichtung (5) und die Abführeinrichtung (6) derart angeordnet sind, dass diese im ersten Drittel und dem dritten Drittel der Einhausung (4) und/oder zwischen einer eingangsseitigen und einer ausgangsseitigen Schleuse (7) der Einhausung (4) angeordnet sind.

12. Verwendung einer Vorrichtung nach einem der Ansprüche 9 bis 11,
**dadurch gekennzeichnet, dass**
die Einhausung (4) zur Aufnahme einer Mehrzahl an Warmbandbunden (B) ausgebildet ist.

13. Verwendung einer Vorrichtung nach einem der Ansprüche 9 bis 12,
**dadurch gekennzeichnet, dass**
die Abführeinrichtung (6) mit einem Verdichter (8) zum Verdichten eines gasförmigen Mediums (G) derart verbunden ist, dass das gasförmige Medium (G) von der Abführeinrichtung (6) zum Verdichter (8) führbar ist.

14. Verwendung einer Vorrichtung nach einem der Ansprüche 9 bis 13,
**dadurch gekennzeichnet, dass**
die Abführeinrichtung (6) mit einer Speichereinrichtung (9) zum Speichern des gasförmigen Mediums (G) derart verbunden ist, dass das gasförmige Medium (G) von der Abführeinrichtung (6) zur Speichereinrichtung (9) führbar ist.

## Claims

1. Method for recovering energy from at least one metallic hot strip bundle (B) which is produced in a hot rolling mill (H) and which has a temperature of more than 200°C,
- wherein the at least one hot strip bundle (B) is arranged at least partially in an energy recovery device (2),
- wherein for recovery of energy, a gaseous medium (G) flows around the at least one hot strip bundle (B) within the energy recovery device (2) such that said medium absorbs energy, particularly heat, from the at least one hot strip bundle (B),
- wherein the at least one hot strip bundle (B) is transported through the energy recovery device (2) by means of a transport device (3),
- wherein a plurality of hot strip bundles (B) is arranged within the enclosure (4) simultaneously,
- wherein the plurality of hot strip bundles (B) passes through the enclosure (4) in a first translational direction,
- wherein the gaseous medium (G) has a flow direction which is essentially contrary to the movement direction of the hot strip bundles (B).

2. Method according to claim 1,
**characterised in that**
the at least one hot strip bundle (B) is arranged in an enclosure (4), particularly a tunnel furnace which is enclosed by the energy recovery device (2) and within which the energy recovery takes place.

3. Method according to claim 1 or 2,
**characterised in that**
a hot strip bundle (B) entering the energy recovery device (2),
in particular the enclosure (4) and/or a hot strip bundle (B) exiting the energy recovery device (2), in particular the enclosure (4), passes through a lock (7) which reduces the energy exchange, in particular the heat exchange, between the surroundings (U) and the energy recovery device (2).

4. Method according to one of the preceding claims,
**characterised in that**
the temperature of the gaseous medium (G) before uptake of the energy, particularly heat, emitted by the at least one hot strip bundle (B) is essentially room temperature.

5. Method according to one of claims 1 to 3,
**characterised in that**
the temperature of the gaseous medium (G) before uptake of the energy, particularly heat, emitted by the at least one hot strip bundle (B) is lower than room temperature.

6. Method according to one of the preceding claims,
**characterised in that** the energy recovery is carried out during transport of the at least one hot strip bundle from a first location (S1) to a second location (S2) within the industrial plant, the first location (S1) being the location of the spooling station of a hot rolling line (10) and the second location being dependent on the further procedure involving the at least one hot strip bundle (B).

7. Method according to one of the preceding claims,
**characterised in that**
the gaseous medium (G) flows around the at least one hot strip bundle (3) at an adjustable pressure, particularly greater than 1 bar.

8. Method according to one of the preceding claims,
**characterised in that**
the gaseous medium (G) enriched with the energy emitted by the at least one hot strip bundle (B) is compressed and/or stored.

9. Use of a device (1) for recovery of energy, particularly heat, from at least one metal hot strip bundle (B) produced in a hot strip mill (H) and being at a temperature of more than 200°C, wherein the device has an energy recovery device (2) within which the at least one hot strip bundle (B) can be arranged, wherein the energy recovery device (2) is configured such that energy transfer takes place from the at least one hot strip bundle (B) arranged within the energy recovery device (2) to a gaseous medium (G) flowing through the energy recovery device (2), comprising a transport device (3) for transporting the at least one hot strip bundle (B) through the energy recovery device (2), wherein the energy recovery device (2) comprises an enclosure (4), in particular a tunnel furnace, through which the at least one hot strip bundle (B) can be transported and within which, preferably during the transporting, the energy recovery takes place, wherein the at least one hot strip bundle (B) which can be arranged within the enclosure (4) is movable in a first translational direction, the flow of gaseous medium (G) being at least partially adjustable in a direction essentially opposite to the first translational direction.

10. Use of a device according to claim 9,
**characterised in that**
the enclosure (4) comprises at least one lock (7) for reducing an energy exchange, particularly a heat exchange, between surroundings (U) of the energy recovery device (2) and the energy recovery device (2) during entry and/or exit of at least one hot strip bundle (B) into or out of the enclosure (4).

11. Use of a device according to claim 9 or 10,
**characterised in that**
the enclosure (4) has an infeed device (5) for the gaseous medium (G) and an extraction device (6) for the gaseous medium (G), wherein the infeed device (5) and the extraction device (6) are arranged in the first third and the last third of the enclosure (4) and/or between an inlet-side lock and an outlet-side lock (7) of the enclosure (4).

12. Use of a device according to one of claims 9 to 11,
**characterised in that**
the enclosure (4) is configured for accommodating a plurality of hot strip bundles (B).

13. Use of a device according to one of claims 9 to 12,
**characterised in that**
the extraction device (6) is connected to a compressor (8) for compressing a gaseous medium (G) such that the gaseous medium (G) can be fed from the extraction device (6) to the compressor (8).

14. Use of a device according to one of claims 9 to 13,
**characterised in that**
the extraction device (6) is connected to a storage device (9) for storing the gaseous medium (G) such that the gaseous medium (G) can be fed from the extraction device (6) to the storage device (9).

## Revendications

1. Procédé de récupération d'énergie à partir d'au moins une bobine métallique de feuillard à chaud (B) fabriquée dans un laminoir à chaud (H) et ayant une température de plus de 200°C,
- l'au moins une bobine de feuillard à chaud (B) étant placée au moins par endroit dans un dispositif de récupération d'énergie (2),
- dans lequel, pour récupérer de l'énergie, l'au moins une bobine de feuillard à chaud (B) est baignée par un écoulement de milieu gazeux (G) à l'intérieur du dispositif de récupération d'énergie (2), de façon que le milieu gazeux absorbe de l'énergie, notamment de la chaleur, cédée par l'au moins une bobine de feuillard à chaud (B),
- l'au moins une bobine de feuillard à chaud (B) étant transportée à travers le dispositif de récupération d'énergie (2) au moyen d'un dispositif de transport (3),
- une multiplicité de bobines de feuillard à chaud (B) étant placée en même temps à l'intérieur de l'enceinte (4),
- la multiplicité de bobines de feuillard à chaud (B) traversant l'enceinte (4) dans une première direction en translation,
- le milieu gazeux (G) ayant une direction d'écoulement qui est sensiblement contraire à la direction de déplacement des bobines de feuillard à chaud (B).

2. Procédé selon la revendication 1, **caractérisé en ce que** l'au moins une bobine de feuillard à chaud (B) est placée dans une enceinte (4), notamment un four à tunnel, qui est entourée par le dispositif de récupération d'énergie (2) et à l'intérieur de laquelle s'effectue la récupération d'énergie.

3. Procédé selon la revendication 1 ou 2, **caractérisé en ce que** l'on fait passer une bobine de feuillard à chaud (B) entrant dans le dispositif de récupération d'énergie (2), notamment dans l'enceinte (4), et/ou une bobine de feuillard à chaud (B) sortant du dispositif de récupération d'énergie (2), notamment de l'enceinte (4), à travers un sas (7) diminuant un échange d'énergie, notamment un échange de chaleur, entre le milieu ambiant (U) et le dispositif de récupération d'énergie (2).

4. Procédé selon l'une des revendications précédentes, **caractérisé en ce que** la température du milieu gazeux (G) avant l'absorption d'énergie cédée par l'au moins une bobine de feuillard à chaud (B), notamment de chaleur, est sensiblement la température ambiante.

5. Procédé selon l'une des revendications 1 à 3, **caractérisé en ce que** la température du milieu gazeux (G) avant l'absorption d'énergie cédée par l'au moins une bobine de feuillard à chaud (B), notamment de chaleur, est inférieure à la température ambiante.

6. Procédé selon l'une des revendications précédentes, **caractérisé en ce que** la récupération d'énergie a lieu pendant le transport de l'au moins une bobine de feuillard à chaud d'un premier endroit (S1) vers un deuxième endroit (S2) dans l'installation industrielle, le premier endroit (S1) étant l'endroit du bobinage d'un train à feuillards à chaud (10) et le deuxième endroit dépendant de la suite du traitement de l'au moins une bobine de feuillard à chaud (B).

7. Procédé selon l'une des revendications précédentes, **caractérisé en ce que** le milieu gazeux qui baigne l'au moins une bobine de feuillard à chaud (B) s'écoule sous une pression réglable, notamment supérieure à 1 bar.

8. Procédé selon l'une des revendications précédentes, **caractérisé en ce que** le milieu gazeux (G) enrichi en énergie par l'énergie cédée par l'au moins une bobine de feuillard à chaud (B) est comprimé et/ou stocké.

9. Utilisation d'un système (1) de récupération d'énergie, notamment de chaleur, à partir d'au moins une bobine métallique de feuillard à chaud (B) fabriquée dans un laminoir à chaud (H) et ayant une température de plus de 200°C, le système comprenant un dispositif de récupération d'énergie (2) à l'intérieur duquel l'au moins une bobine de feuillard à chaud (B) peut être placée, le dispositif de récupération d'énergie (2) étant conçu de façon qu'un transfert d'énergie s'effectue de l'au moins une bobine de feuillard à chaud (B) placée dans le dispositif de récupération d'énergie (2) à un milieu gazeux (G) passant à travers le dispositif de récupération d'énergie (2), comprenant un dispositif de transport (3) pour transporter l'au moins une bobine de feuillard à chaud (B) à travers le dispositif de récupération d'énergie (2), le dispositif de récupération d'énergie (2) comportant une enceinte (4), notamment un four à tunnel, à travers laquelle l'au moins une bobine de feuillard à chaud (B) peut être transportée et à l'intérieur de laquelle s'effectue, de préférence pendant le transport, la récupération d'énergie, l'au moins une bobine de feuillard à chaud (B), qui peut être placée à l'intérieur de l'enceinte (4), pouvant être déplacée dans une première direction en translation, l'écoulement du milieu gazeux (G) étant réglable, au moins par endroit, dans une direction sensiblement contraire à la première direction en translation.

10. Utilisation d'un système selon la revendication 9, **caractérisée en ce que** l'enceinte (4) comporte au moins un sas (7) pour diminuer un échange d'énergie, notamment un échange de chaleur, entre un milieu ambiant (U) du dispositif de récupération d'énergie (2) et le dispositif de récupération d'énergie (2) lors de l'entrée et/ou la sortie d'au moins une bobine de feuillard à chaud (B) dans l'enceinte (4) ou hors de celle-ci.

11. Utilisation d'un système selon la revendication 9 ou 10, **caractérisée en ce que** l'enceinte (4) comporte un dispositif d'apport (5) pour le milieu gazeux (G) et un dispositif d'évacuation (6) pour le milieu gazeux (G), le dispositif d'apport (5) et le dispositif d'évacuation (6) étant disposés de manière à se trouver dans le premier tiers et dans le troisième tiers de l'enceinte (4) et/ou entre un sas (7) de l'enceinte (4) situé du côté de l'entrée et un sas (7) de l'enceinte (4) situé du côté de la sortie.

12. Utilisation d'un système selon l'une des revendications 9 à 11, **caractérisée en ce que** l'enceinte (4) est conçue pour recevoir une multiplicité de bobines de feuillard à chaud (B).

13. Utilisation d'un système selon l'une des revendications 9 à 12, **caractérisée en ce que** le dispositif d'évacuation (6) est relié à un compresseur (8) permettant de comprimer un milieu gazeux (G), de façon que le milieu gazeux (G) puisse être envoyé du dispositif d'évacuation (6) au compresseur (8).

14. Utilisation d'un système selon l'une des revendications 9 à 13, **caractérisée en ce que** le dispositif d'évacuation (6) est relié à un dispositif de stockage (9) permettant de stocker le milieu gazeux (G), de façon que le milieu gazeux (G) puisse être envoyé du dispositif d'évacuation (6) au dispositif de stockage (9).
